# DEMANDE DE BREVET EUROPEEN

(11) **EP 4 714 869 A1**
(43) Date de publication de la demande: **25.03.2026**
(21) Numéro de dépôt: 25204008.4
(22) Date de dépôt: 23.09.2025
(51) Int. Cl.: B65G 1/12, A21B 1/46, B65G 35/06, B65G 17/00, A21B 1/42, A21B 1/50

(54) **INSTALLATION DE TRAITEMENT THERMIQUE POUR DES PRODUITS ALIMENTAIRES**

(30) Priorité: 24.09.2024 FR 2410182
(71) Demandeur: Armor Inox, 56430 Mauron (FR)
(72) Inventeur: COURTIAL, Pierre-Loïc, 56430 MAURON (FR)
(74) Mandataire: Cabinet Le Guen Maillet

(57) **Abrégé**

L'invention concerne une installation de traitement thermique (100) avec plusieurs lignes de transport (104a-b) disposés les unes au-dessus des autres, des plateaux (50) avec deux roues et un taquet, des ascenseurs (106a-b) pour monter un plateau d'une ligne de transport (104a) inférieure à une autre ligne de transport (104b) supérieure, des rails sur lesquels roulent les plateaux (50), et des bandes de transmission avec des contre-taquets coopérant avec les taquets des plateaux (50) où au niveau de chaque ascenseur (106a-b), chaque rail présente une écluse arrangée pour s'ouvrir lorsqu'un plateau (50) est monté et pour se refermer lorsque le plateau (50) est au-dessus du rail.

## Description

### ÉTAT DE LA TECHNIQUE ANTÉRIEURE

Les produits alimentaires doivent subir différents traitements thermiques pour être chauffés et pour être refroidis. Différentes installations de traitement thermique permettent d'assurer de tels traitements thermiques. Le document EP-A-1 127 814 montre une installation qui s'étend sur plusieurs étages et permet de transporter des plateaux sur ces différents niveaux. L'installation comporte entre autres une chaîne qui est montée entre une pluralité de roues dentées et qui parcourt l'ensemble des niveaux. Chaque plateau est solidaire de la chaîne par un axe horizontal et à chaque changement d'étages, l'installation comporte une roue crantée supplémentaire qui prend en charge un autre axe solidaire du plateau pour assurer une montée/descente du plateau tout en assurant que celui-ci reste horizontal.

Même si une telle installation donne satisfaction, il reste des problèmes à résoudre. Par exemple, les plateaux restent solidaires de la chaîne et ils ne peuvent donc pas être séparés de cette dernière. Il est alors relativement complexe de nettoyer l'installation. En effet, il n'est pas possible de nettoyer chaque plateau individuellement et ce nettoyage doit donc être fait directement sur l'installation. En outre, la chaîne est relativement longue et en cas de rupture de cette dernière, sa réparation peut être complexe.

### EXPOSÉ DE L'INVENTION

Un objet de la présente invention est ainsi de proposer une installation de traitement thermique pour des produits alimentaires qui permet entre autres de libérer les plateaux par rapport aux moyens assurant leur déplacement.

À cet effet, est proposée une installation de traitement thermique présentant un plan médian vertical parallèle à une direction d'introduction et comportant :
- plusieurs lignes de transport s'étendant parallèlement à la direction d'introduction les unes au-dessus des autres entre une zone amont et une zone aval,
- au moins un plateau présentant de part et d'autre du plan médian vertical, deux roues et un taquet,
- un ascenseur aval au niveau de la zone aval et un ascenseur amont au niveau de la zone amont où chaque ascenseur est arrangé pour déplacer au moins un plateau d'une ligne de transport inférieure à une autre ligne de transport supérieure, pour chaque paire d'une ligne de transport inférieure et d'une ligne de transport supérieure :
   - de part et d'autre du plan médian vertical, un rail inférieur et un rail supérieur s'étendant parallèlement à la direction d'introduction entre la zone amont et la zone aval et sur lesquels roulent les roues des plateaux, et
   - de part et d'autre du plan médian vertical, une bande de transmission sans fin où chaque bande de transmission porte une pluralité de contre-taquets et présente un brin inférieur arrangé de manière à ce que les contre-taquets portés par ledit brin inférieur coopèrent avec les taquets des plateaux circulant sur la ligne de transport inférieure et un brin supérieur arrangé de manière à ce que les contre-taquets portés par ledit brin supérieur coopèrent avec les taquets des plateaux circulant sur la ligne de transport supérieure, où chaque bande de transmission est disposée à l'extérieur par rapport aux roues, et
- des moyens d'entraînement arrangés pour entraîner chaque bande de transmission, où au niveau de l'ascenseur aval, chaque rail supérieur présente un évidement dans lequel est disposée une écluse arrangée pour s'ouvrir lorsqu'un plateau est transporté du rail inférieur au-dessus du rail supérieur et pour se refermer lorsque les roues dudit plateau sont au-dessus du rail supérieur et où au niveau de l'ascenseur amont, chaque rail inférieur présente un évidement dans lequel est disposée une écluse arrangée pour s'ouvrir lorsqu'un plateau est transporté d'un rail supérieur de la paire sous-jacente, au-dessus du rail inférieur et pour se refermer lorsque les roues dudit plateau sont au-dessus du rail inférieur.

Avantageusement, au voisinage de chaque écluse, le rail concerné présente une fente destinée à permettre le passage d'un taquet du plateau lors de son transport d'un rail sous-jacent sur ledit rail concerné.

Avantageusement, chaque écluse comporte au moins une porte, ladite au moins une porte étant montée articulée sur le rail concerné entre une position ouverte dans laquelle ladite porte est basculée pour libérer l'évidement et une position fermée dans laquelle ladite porte est basculée pour fermer l'évidement.

Selon un mode de réalisation particulier, chaque écluse comporte une seule porte montée mobile en rotation sur le rail concerné autour d'un axe de rotation horizontal et parallèle à la direction d'introduction.

Selon un mode de réalisation particulier, chaque écluse comporte deux portes, chacune montée mobile en rotation sur le rail concerné autour d'un axe de rotation horizontal et perpendiculaire à la direction d'introduction.

Avantageusement, la ou chaque porte est contrainte vers sa position fermée par un ressort de traction installé entre la ou chaque porte et le rail.

Avantageusement, chaque ascenseur comporte :
- un châssis portant au moins un sous-plateau destiné à recevoir un plateau,
- un système de guidage assurant un guidage vertical du châssis,
- un moteur présentant un arbre moteur mobile en rotation,
- une bielle principale présentant une première extrémité montée articulée sur le châssis et une deuxième extrémité,
- une première bielle secondaire présentant une première extrémité montée articulée avec la deuxième extrémité de la bielle principale et une deuxième extrémité rigidement liée à l'arbre moteur.

Avantageusement, chaque ascenseur comporte en outre une deuxième bielle secondaire symétrique de la première bielle secondaire par rapport à la bielle principale et présentant une première extrémité montée articulée avec la deuxième extrémité de la bielle principale et une deuxième extrémité montée mobile en rotation autour d'un axe de rotation coaxial avec l'arbre moteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en perspective d'une installation de traitement thermique pour des produits alimentaires selon l'invention,
Fig. 2 est une vue en perspective d'un agrandissement d'une zone aval II de l'installation de la Fig. 1,
Fig. 3 est une vue en perspective d'un agrandissement d'une zone amont III de l'installation de la Fig. 1,
Fig. 4 est un agrandissement d'un détail de l'installation de la Fig. 1,
Fig. 5 est un agrandissement d'un détail de l'installation de la Fig. 1,
Fig. 6 est une vue en perspective d'un ascenseur pour l'installation de la Fig. 1,
Fig. 7 est une vue en perspective de l'ascenseur de la Fig. 6,
Fig. 8 est une vue en perspective de l'ascenseur de la Fig. 6,
Fig. 9 est un agrandissement d'un détail de l'installation de la Fig. 1,
Fig. 10 est une vue en perspective d'une écluse en position fermée,
Fig. 11 est une vue en perspective de l'écluse de la Fig. 10 en position ouverte, et
Fig. 12 est une vue similaire à la Fig. 9 pour une variante de réalisation.

### EXPOSÉ DÉTAILLÉ DE MODES DE RÉALISATION

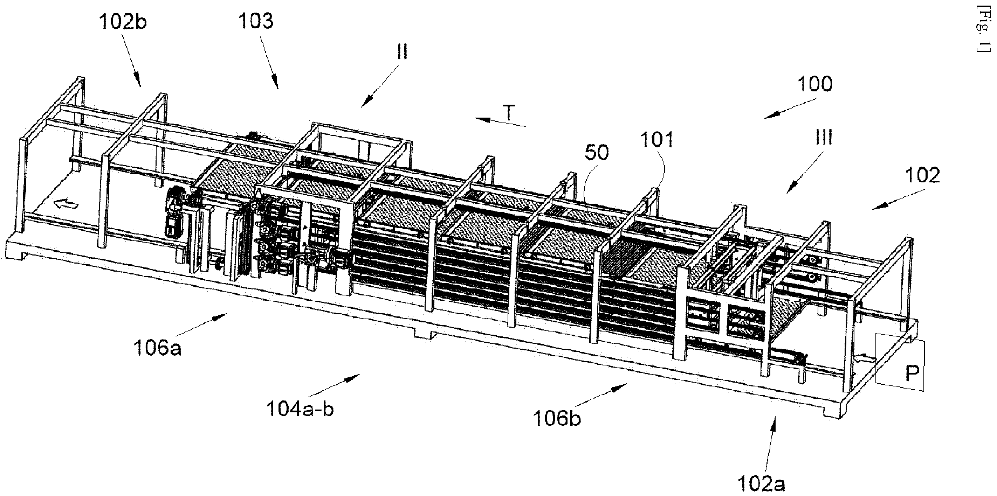

La Fig. 1 montre une installation de traitement thermique 100 permettant par exemple de chauffer ou refroidir des produits alimentaires qui sont disposés sur des plateaux 50 qui traversent l'installation de traitement thermique 100 comme cela est expliqué ci-dessous. Le système pour chauffer ou refroidir n'est pas représenté pour simplifier les Figs., mais il peut prendre par exemple la forme de buses vaporisant de la chaleur ou de l'eau froide sur les produits alimentaires.

L'installation de traitement thermique 100 comporte un bâti 102 qui est fixé au sol et qui comporte ici une pluralité d'arches 101 qui sont alignées les unes à la suite des autres parallèlement à une direction d'introduction T horizontale. L'installation de traitement thermique 100 s'étend entre une entrée 102a par laquelle les plateaux 50 arrivent à l'installation de traitement thermique 100 et une sortie 102b par laquelle les plateaux 50 partent de l'installation de traitement thermique 100.

La direction d'introduction T est orientée de l'entrée 102a vers la sortie 102b et l'installation de traitement thermique 100 présente un plan médian vertical P parallèle à la direction d'introduction T.

L'installation de traitement thermique 100 comporte plusieurs lignes de transport 104a-b s'étendant parallèlement à la direction d'introduction T les unes au-dessus des autres entre une zone amont III au voisinage de l'entrée 102a et une zone aval II au voisinage de la sortie 102b.

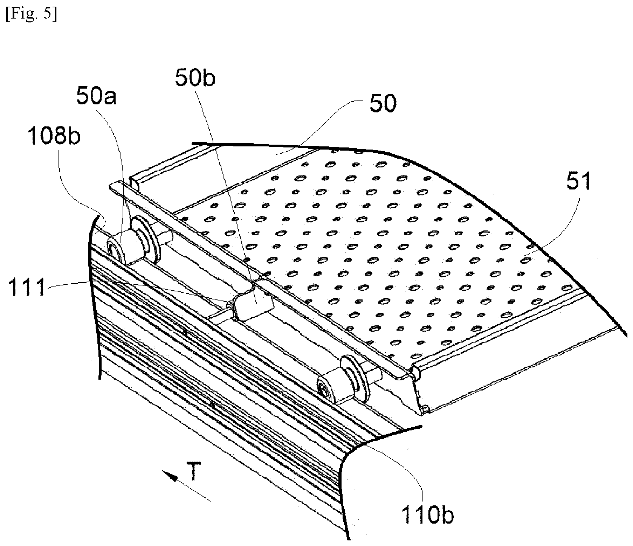

L'installation de traitement thermique 100 comporte également au moins un plateau 50 sur lequel les produits alimentaires sont déposés et comme le montre plus clairement la Fig. 5, chaque plateau 50 présente de part et d'autre du plan médian vertical P, deux roues 50a et un taquet 50b. Ici, le plateau 50 présente un fond 51 ajouré pour permettre entre autres le passage des fluides.

Au niveau de la zone aval II, l'installation de traitement thermique 100 comporte un ascenseur aval 106a et au niveau de la zone amont III, l'installation de traitement thermique 100 comporte un ascenseur amont 106b où chaque ascenseur 106a-b assure le levage du plateau 50 d'une ligne de transport 104a inférieure à une ligne de transport 104b supérieure juste au-dessus. Chaque ascenseur 106a-b est fixé au bâti 102.

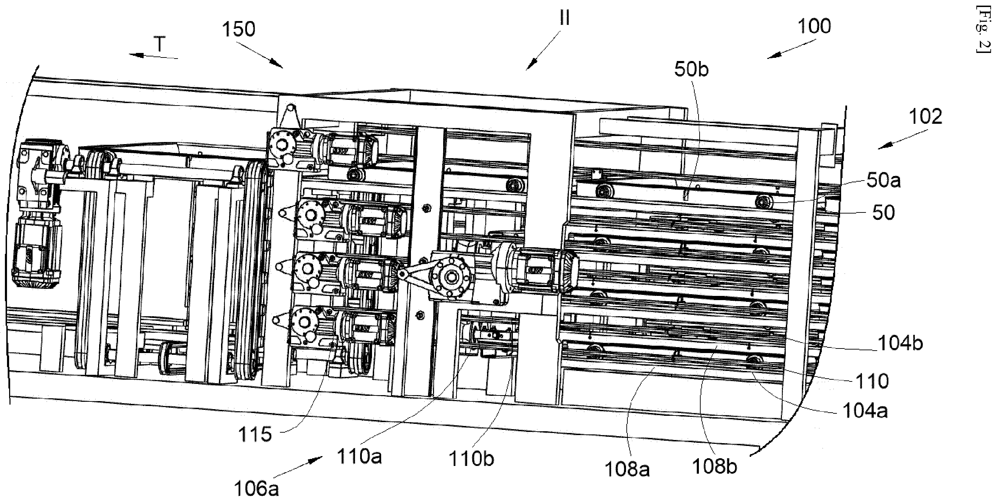

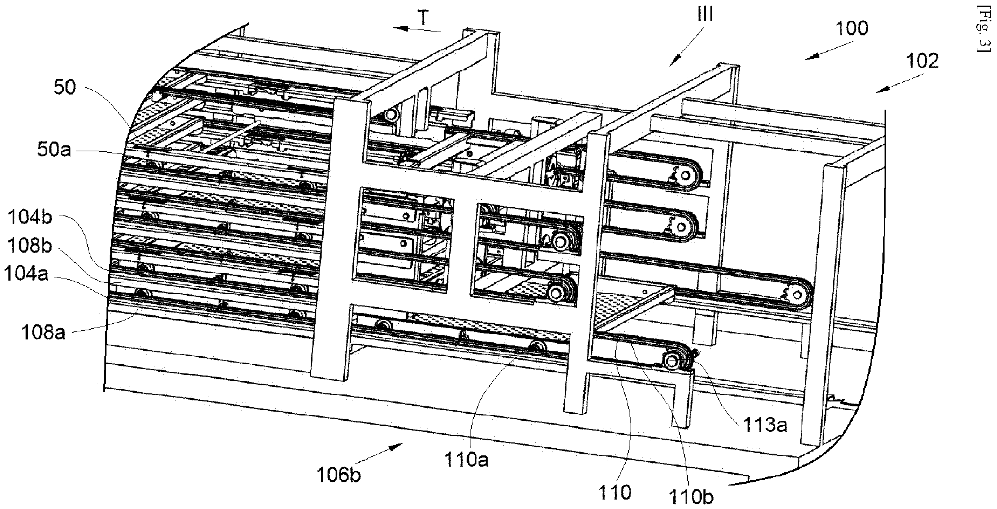

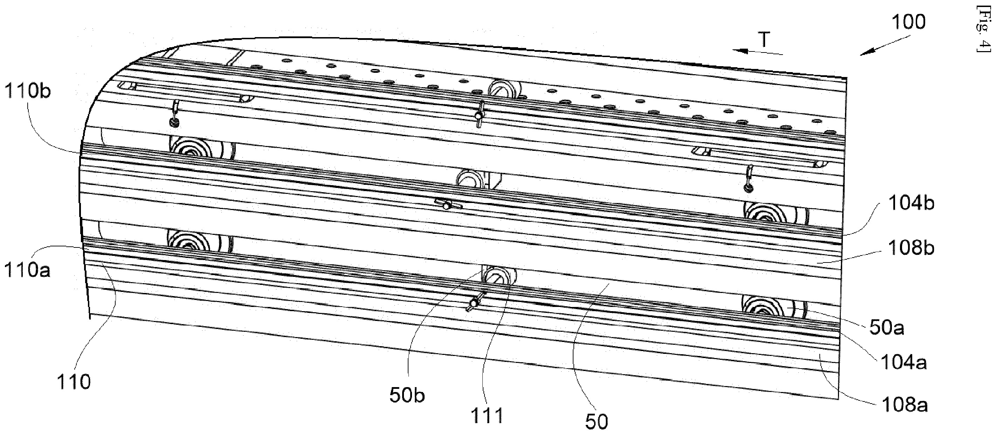

La Fig. 2 montre la zone aval II et la Fig. 3 montre la zone amont III. La Fig. 4 montre deux lignes de transport 104a-b.

Pour chaque paire constituée d'une ligne de transport 104a inférieure et d'une ligne de transport 104b supérieure disposée au-dessus de la ligne de transport 104a inférieure, l'installation de traitement thermique 100 comporte de part et d'autre du plan médian vertical P, un rail inférieur 108a correspondant à la ligne de transport 104a inférieure et un rail supérieur 108b correspondant à la ligne de transport 104b supérieure. Les rails 108a-b sont fixés sur le bâti 102. Les rails 108a-b s'étendent parallèlement à la direction d'introduction T entre la zone amont III et la zone aval II et ils sont arrangés de manière à ce que les roues 50a des plateaux 50 roulent dessus.

Pour chaque ligne de transport 104a-b, il y a ainsi deux rails 108a-b parallèles et à la même hauteur et les plateaux 50 se déplacent le long de chaque ligne de transport 104a-b.

De la même manière pour chaque paire de lignes de transport 104a-b, l'installation de traitement thermique 100 comporte de part et d'autre du plan médian vertical P une bande de transmission 110 sans fin formant une boucle. Il y a donc ainsi deux bandes de transmission 110 pour chaque paire de lignes de transport 104a-b.

Chaque bande de transmission 110 présente un brin inférieur 110a arrangé le long de la ligne de transport 104a inférieure et un brin supérieur 110b arrangé le long de la ligne de transport 104b supérieure. Les brins 110a-b sont ainsi parallèles à la direction d'introduction T. Chaque bande de transmission 110 est ici tendue entre deux poulies 113a (une seule est visible sur la Fig. 3) montées mobile en rotation sur le bâti 102 et elle est entraînée en mouvement par des moyens d'entraînement 150 appropriés, comme par exemple ici un moteur 115 portant la deuxième poulie pour chaque bande de transmission 110. Il est également possible de prévoir qu'un même moteur entraîne plusieurs bandes de transmission 110 par l'intermédiaire de bandes de renvois.

Chaque bande de transmission 110 peut être une courroie crantée ou une chaîne et chaque poulie est alors une poulie crantée.

Il y a ainsi deux bandes de transmission 110 par paire de lignes de transport 104a-b, et un défaut d'une bande de transmission 110 nécessitera une réparation plus simple que dans le cas de l'état de la technique, puisque la bande de transmission 110 est plus courte.

Chaque bande de transmission 110 porte une pluralité de contre-taquets 111 qui sont orientés vers l'intérieur.

Le brin inférieur 110a est arrangé de manière à ce que les contre-taquets 111 qu'il porte coopèrent avec les taquets 50b des plateaux 50 circulant sur la ligne de transport 104a inférieure associée au brin inférieur 110a.

Le brin supérieur 110b est arrangé de manière à ce que les contre-taquets 111 qu'il porte coopèrent avec les taquets 50b des plateaux 50 circulant sur la ligne de transport 104b supérieure associée au brin supérieur 110b.

Ainsi, lorsqu'un contre-taquet 111 se déplace avec la bande de transmission 110, il entre en contact avec le taquet 50b d'un plateau 50 et le pousse pour faire rouler ledit plateau 50. Bien sûr, les contre-taquets 111 sont disposés de manière à ce qu'un contre-taquet 111 pousse sur chaque taquet 50b d'un plateau 50 pour assurer une poussée identique de chaque côté du plateau 50.

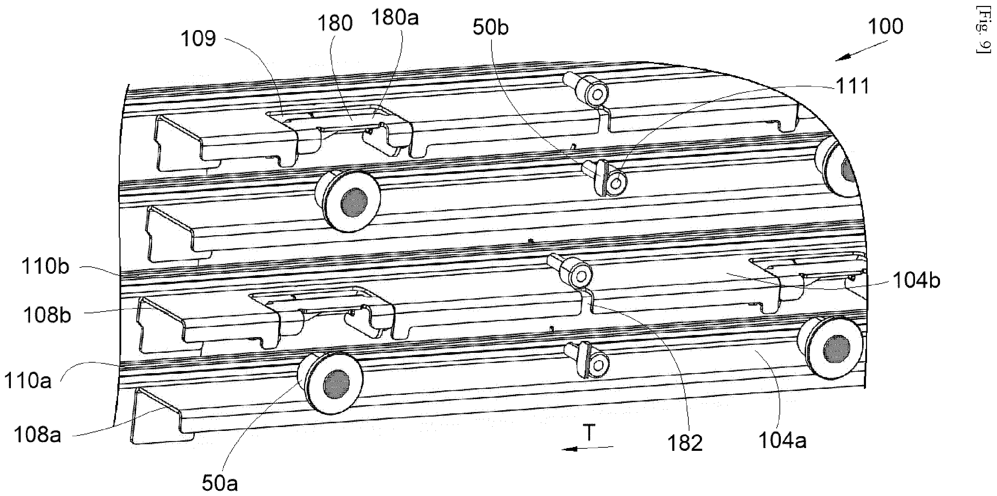

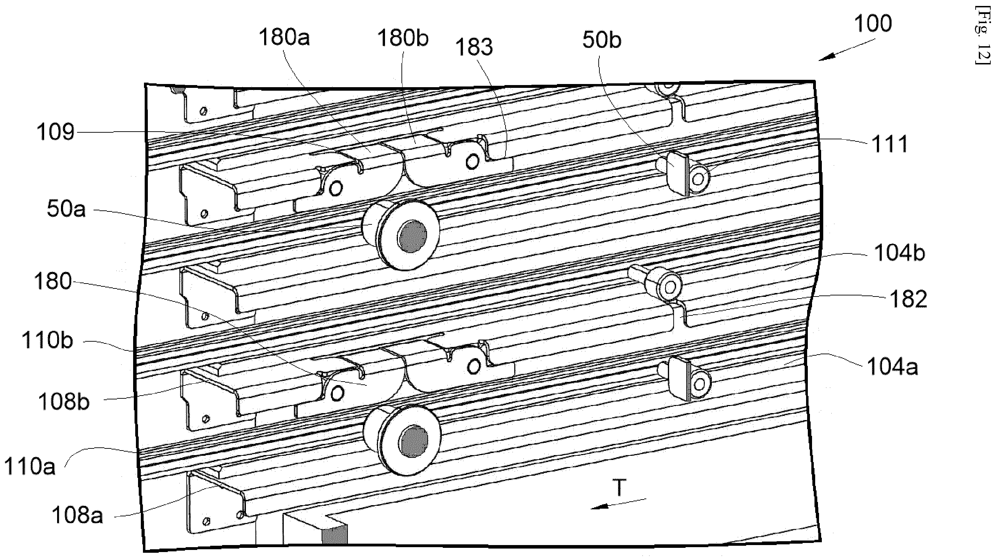

Chaque bande de transmission 110 est disposée à l'extérieur par rapport aux roues 50a des plateaux 50 pour que le plateau 50 se trouve ainsi entièrement entre les bandes de transmission 110 et que son déplacement vertical par les ascenseurs 106a-b ne soit pas entravé par une interaction entre les roues 50a et les bandes de transmission 110. Il y a ainsi une partie de chaque rail 108a-b qui se trouve à l'intérieur par rapport aux bandes de transmission 110. Les Figs. 9 à 11 montrent un premier mode de réalisation de l'invention et la Fig. 12 montre une variante de réalisation.

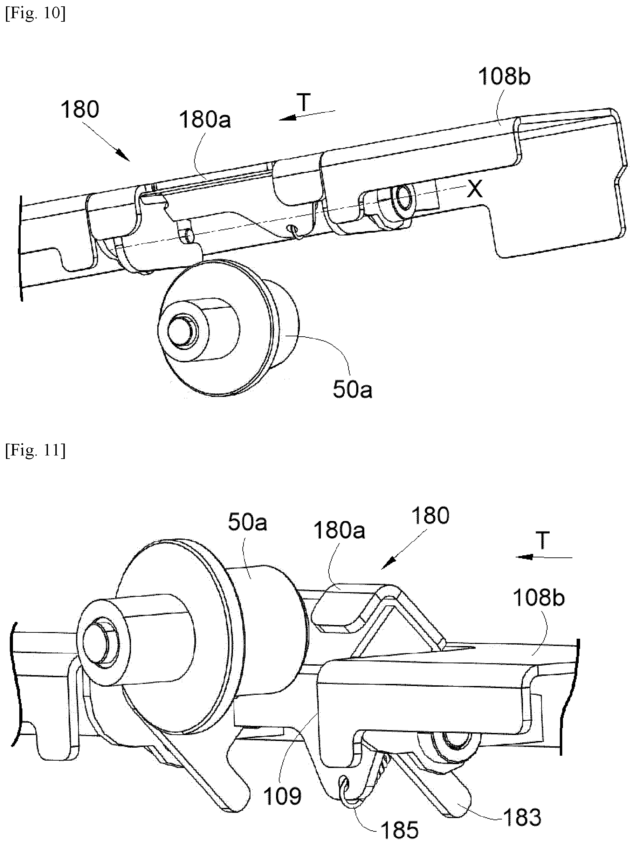

Ainsi, au niveau de l'ascenseur aval 106a, chaque rail supérieur 108b présente un évidement 109 dans lequel est disposée une écluse 180 arrangée pour s'ouvrir lorsqu'un plateau 50 est transporté du rail inférieur 108a au-dessus du rail supérieur 108b et pour se refermer lorsque les roues 50a dudit plateau 50 sont au-dessus du rail supérieur 108b. Ainsi, il y a un évidement 109 par roue 50a, c'est-à-dire deux de chaque côté. Lorsque le plateau 50 est sur le rail inférieur 108a (Fig. 10), l'écluse 180 est en position fermée, et lorsque le plateau 50 est déplacé vers le haut (Fig. 11), chaque roue 50a vient buter contre l'écluse 180 et la soulève pour la placer en position ouverte et lorsque la roue 50a est passée au-dessus de l'écluse 180, cette dernière se referme par gravité pour prolonger le rail supérieur 108b et obturer l'évidement 109. Le plateau 50 peut alors être reposé sur les rails supérieurs 108b.

De la même manière mais avec un décalage vers le haut, au niveau de l'ascenseur amont 106b, chaque rail inférieur 108a présente un évidement 109 dans lequel est disposée une écluse 180 arrangée pour s'ouvrir lorsqu'un plateau 50 est transporté d'un rail supérieur 108b de la paire sous-jacente, au-dessus du rail inférieur 108a et pour se refermer lorsque les roues 50a dudit plateau 50 sont au-dessus du rail inférieur 108a. Le rail inférieur 108a de la paire de lignes de transport 104a-b la plus basse ne présente pas d'écluse car les plateaux 50 arrivent par l'entrée 102a et non par-dessous.

Chaque évidement 109 se situe à l'intérieur par rapport aux bandes de transmission 110.

Le fonctionnement de l'installation de traitement thermique 100 est alors le suivant pour un plateau 50, sachant que les plateaux 50 se déplacent les uns à la suite des autres. Un plateau 50 chargé arrive par l'entrée 102a où il est pris en charge en passant sous l'ascenseur amont 106b en suivant les rails inférieurs 108a des paires les plus basses. Arrivé à l'ascenseur aval 106a, le plateau 50 est soulevé pour venir sur les rails supérieurs 108b de la même paire et le plateau 50 est déplacé vers l'ascenseur amont 106b. Arrivé à l'ascenseur amont 106b, le plateau 50 est soulevé pour venir sur les rails inférieurs 108a de la paire au-dessus et le plateau 50 est déplacé vers l'ascenseur aval 106a. Le déplacement en zigzag se poursuit jusqu'à atteindre le dernier étage qui comporte uniquement des rails inférieurs 108a qui guident le plateau 50 vers la sortie 102b en passant au-dessus de l'ascenseur aval 106a et le plateau 50 quitte alors l'installation de traitement thermique 100. Chaque ascenseur 106a-b redescend après chaque montée pour revenir à sa position basse et attendre le prochain plateau 50.

Dans le mode de réalisation de l'invention présenté à la Fig. 1, l'installation de traitement thermique 100 comporte un système de manutention 103 qui assure le déplacement du plateau 50 vers le bas et qui peut prendre toute forme connue de l'homme du métier.

Ainsi, chaque plateau 50 passe sur chaque ligne de transport 104a-b entre les ascenseurs 106a-b.

En outre, les plateaux 50 ne sont donc pas rigidement liés aux bandes de transmission 110 et ils peuvent être facilement retirés de l'installation de traitement thermique 100 pour être lavés, remplacés, etc.

Les contre-taquets 111 sont arrangés de manière à ce que lorsque le plateau 50 monte, le contre-taquet 111 de la ligne de transport 104a-b de départ est de l'autre côté du taquet 50b par rapport au contre-taquet 111 de la ligne de transport 104b-a d'arrivée car le sens de déplacement du plateau 50 change de sens entre les deux lignes de transport 104a-b.

Au voisinage de chaque écluse 180, le rail 108a-b concerné par ladite écluse 180 présente une fente 182 qui est arrangée pour permettre le passage d'un taquet 50b du plateau 50 lors de son transport d'un rail sous-jacent sur ledit rail 108a-b concerné, ainsi le taquet 50b passe à travers la fente 182. La largeur de la fente 182 parallèlement à la direction d'introduction T est inférieure au diamètre des roues 50a pour éviter que ces dernières passent à travers les fentes lorsqu'elles roulent dessus.

Pour éviter la réalisation de fentes 182, il est possible de monter les taquets 50b sur des liaisons pivot autour d'axes parallèles à la direction d'introduction T où la liaison pivot comporte un élément de rappel, tel qu'un ressort, qui ramène le taquet 50b dans sa position de coopération avec les contre-taquets 111.

Dans le mode de réalisation de l'invention présenté aux Figs. 9 à 11, chaque écluse 180 comporte une seule porte 180a.

La porte 180a est montée articulée sur le rail 108a-b concerné entre une position ouverte (Fig. 11) dans laquelle la porte 180a est basculée, ici vers le haut, pour libérer l'évidement 109 et permettre le passage de la roue 50a, et une position fermée (Fig. 10) dans laquelle la porte 180a est basculée, ici vers le bas, pour fermer l'évidement 109.

La porte 180a est mobile en rotation autour d'un axe de rotation X horizontal et parallèle à la direction d'introduction T. Ainsi, lorsque la roue 50a est sous la porte 180a et que le plateau 50 est soulevé, la roue 50a vient au contact de la porte 180a et la fait basculer vers le haut pour libérer l'évidement 109 et permettre le passage de la roue 50a. Lorsque la roue 50a est passée, la porte 180ab se referme sous l'action de la pesanteur jusqu'à la position de départ. Le plateau 50 peut alors être redescendu pour poser les roues sur la porte 180a qui prolonge le rail 108a-b et ferme l'évidement 109.

La position de départ est matérialisée par un système de butée 183 entre la porte 180a et le rail 108a-b.

Pour aider au retour de la porte 180a vers la position fermée, un ressort de traction 185 peut être installé entre la porte 180a et le rail 108a-b.

Dans le mode de réalisation de l'invention présenté à la Fig. 12, chaque écluse 180 comporte deux portes 180a-b.

Chaque porte 180a-b est montée articulée sur le rail 108a-b concerné entre une position ouverte dans laquelle la porte 180a-b est basculée, ici vers le haut, pour libérer l'évidement 109 et permettre le passage de la roue 50a, et une position fermée dans laquelle la porte 180a-b est basculée, ici vers le bas, pour fermer l'évidement 109.

Chaque porte 180a-b est mobile en rotation autour d'un axe de rotation horizontal et perpendiculaire à la direction d'introduction T. Ainsi, lorsque la roue 50a est sous les portes 180a-b et que le plateau 50 est soulevé, la roue 50a vient au contact des portes 180a-b et les fait basculer vers le haut pour libérer l'évidement 109 et permettre le passage de la roue 50a. Lorsque la roue 50a est passée, les portes 180a-b se referment sous l'action de la pesanteur jusqu'à la position de départ. Le plateau 50 peut alors être redescendu pour poser les roues sur les portes 180a-b qui prolongent le rail 108a-b et ferment l'évidement 109.

La position de départ est matérialisée par un système de butée 183 entre chaque porte 180a-b et le rail 108a-b.

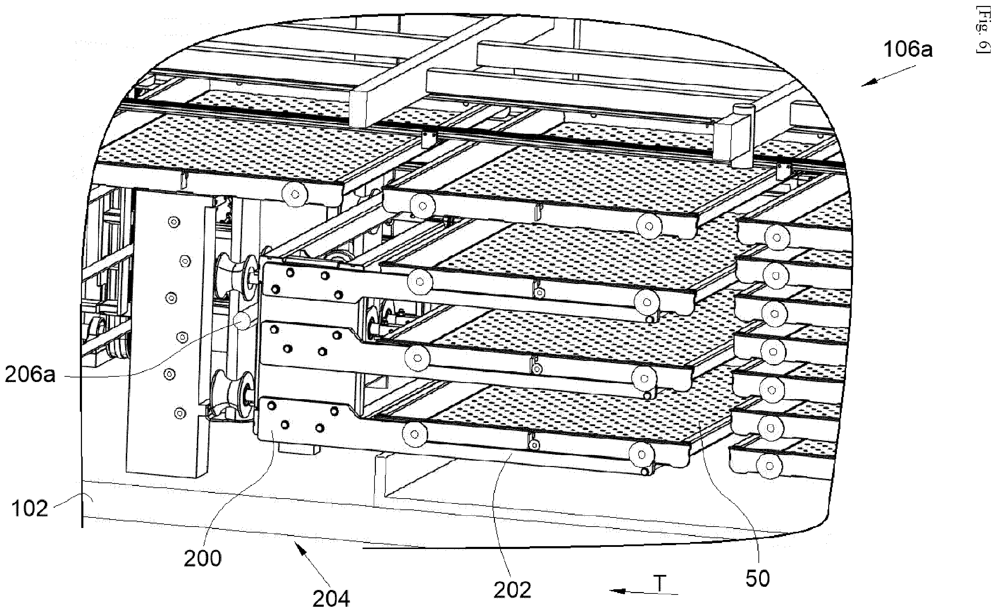

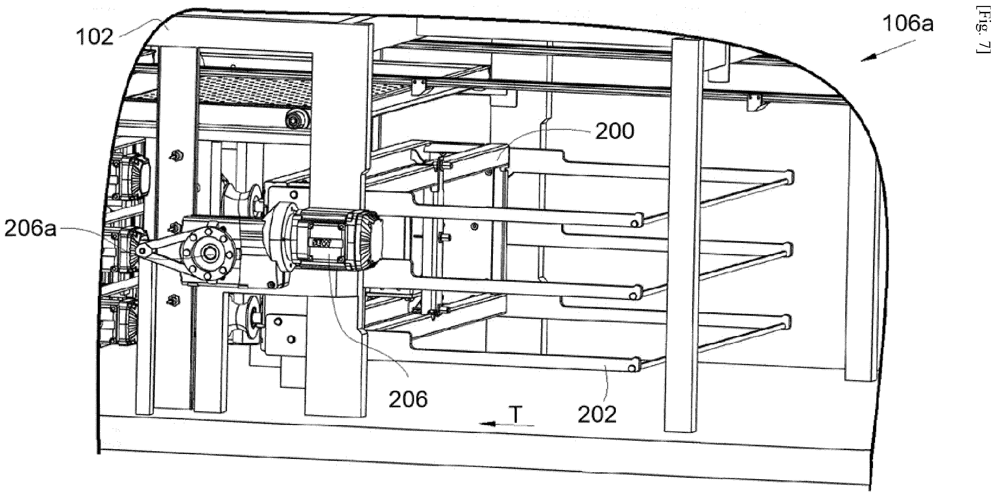

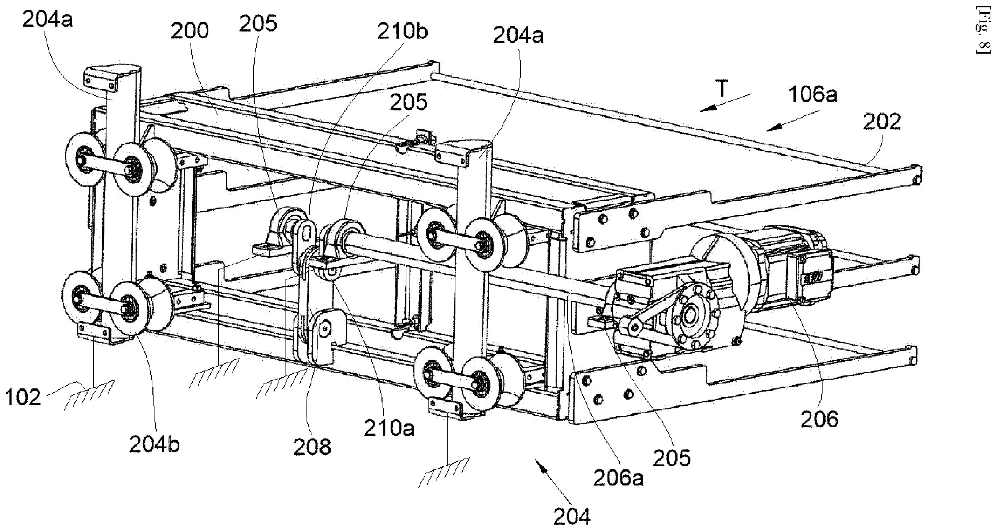

Comme précédemment, pour aider au retour de chaque porte 180a-b vers la position fermée, un ressort de traction peut être installé entre chaque porte 180a-b et le rail 108a-b associé. Ainsi, d'une manière générale, chaque écluse 180 comporte au moins une porte 180a-b, ladite au moins une porte 180a-b étant montée articulée sur le rail 108a-b concerné entre la position ouverte dans laquelle ladite porte 180a-b est basculée pour libérer l'évidement 109 et la position fermée dans laquelle ladite porte 180a-b est basculée pour fermer l'évidement 109. Les Figs. 6 à 8 montrent différentes vues de l'ascenseur aval 106a, mais la structure de l'ascenseur amont 106b est similaire et la description qui suit vaut donc pour les deux. L'ascenseur aval 106a est monté mobile verticalement par rapport au bâti 102.

L'ascenseur aval 106a comporte un châssis 200 portant au moins un sous-plateau 202 qui est destiné à recevoir un plateau 50. Ici il y a trois sous-plateaux 202 car il y a trois paires de lignes de transport 104a-b. chaque sous-plateau 202 reçoit ainsi un plateau 50 et lorsque l'ascenseur aval 106a est monté, les plateaux 50 sont déchargés.

L'ascenseur aval 106a comporte également un système de guidage 204 qui assure un guidage vertical du châssis 200 en montée et en descente.

Dans le mode de réalisation de l'invention présenté ici, le système de guidage 204 comporte deux glissières 204a qui sont fixées verticalement au bâti 102 et pour chaque glissière 204a, quatre galets 204b fixés par paire de part et d'autre de la glissière 204a pour l'enserrer et chaque galet 204b est monté sur le châssis 200 mobile en rotation autour d'un axe horizontal. Ainsi, lorsque le châssis 200 monte ou descend le long des glissières 204a, les galets 204b roulent le long de la glissière 204a associée.

L'entraînement de l'ascenseur aval 106a est assuré par un moteur 206 fixé au bâti 102 et présentant un arbre moteur 206a qui est donc mobile en rotation autour d'un axe horizontal. Ici, l'arbre moteur 206a présente un angle de 90° par rapport à l'axe du moteur 206 par installation d'un système de changement de direction.

Le guidage en rotation de l'arbre moteur 206a est assuré ici par deux paliers 205 fixés au bâti 102.

L'ascenseur aval 106a présente également une bielle principale 208 présentant une première extrémité montée articulée sur le châssis 200 et une deuxième extrémité. L'articulation de la première extrémité de la bielle principale 208 est une rotation à axe parallèle à l'arbre moteur 206a.

L'ascenseur aval 106a présente également une première bielle secondaire 210a présentant une première extrémité montée articulée avec la deuxième extrémité de la bielle principale 208, également une rotation autour d'un axe parallèle à l'arbre moteur 206a, et une deuxième extrémité rigidement liée à l'arbre moteur 206a, ici à travers l'un des paliers 205.

Ainsi, lorsque l'arbre moteur 206a tourne, il entraîne en rotation la première bielle secondaire 210a dont la première extrémité se décale en entraînant la deuxième extrémité de la bielle principale 208 et lorsque la bielle secondaire 210a fait un tour complet, la bielle principale 208 monte puis descend en entraînant dans le même sens le châssis 200.

L'ascenseur aval 106a est ainsi relativement simple à mettre en œuvre en utilisant un système de bielles.

Pour des raisons d'équilibrage des forces, l'ascenseur aval 106a comporte en outre une deuxième bielle secondaire 210b qui est symétrique de la première bielle secondaire 210a par rapport à la bielle principale 208 et qui présente une première extrémité montée articulée avec la deuxième extrémité de la bielle principale 208 et une deuxième extrémité montée mobile en rotation autour d'un axe de rotation coaxial avec l'arbre moteur 206a.

La deuxième extrémité de la deuxième bielle secondaire 210b est montée articulée sur le bâti 102 par l'intermédiaire d'un palier 205 fixé au bâti 102.

## Revendications

1. Installation de traitement thermique (100) présentant un plan médian vertical (P) parallèle à une direction d'introduction (T) et comportant :
- plusieurs lignes de transport (104a-b) s'étendant parallèlement à la direction d'introduction (T) les unes au-dessus des autres entre une zone amont (III) et une zone aval (II),
- au moins un plateau (50) présentant de part et d'autre du plan médian vertical (P), deux roues (50a) et un taquet (50b),
- un ascenseur aval (106a) au niveau de la zone aval (II) et un ascenseur amont (106b) au niveau de la zone amont (III) où chaque ascenseur (106a-b) est arrangé pour déplacer au moins un plateau d'une ligne de transport (104a) inférieure à une autre ligne de transport (104b) supérieure,
pour chaque paire d'une ligne de transport (104a) inférieure et d'une ligne de transport (104b) supérieure :
- de part et d'autre du plan médian vertical (P), un rail inférieur (108a) et un rail supérieur (108b) s'étendant parallèlement à la direction d'introduction (T) entre la zone amont (III) et la zone aval (II) et sur lesquels roulent les roues (50a) des plateaux (50), et
- de part et d'autre du plan médian vertical (P), une bande de transmission (110) sans fin où chaque bande de transmission (110) porte une pluralité de contre-taquets (111) et présente un brin inférieur (110a) arrangé de manière à ce que les contre-taquets (111) portés par ledit brin inférieur (110a) coopèrent avec les taquets (50b) des plateaux (50) circulant sur la ligne de transport (104a) inférieure et un brin supérieur (110b) arrangé de manière à ce que les contre-taquets (111) portés par ledit brin supérieur (110b) coopèrent avec les taquets (50b) des plateaux (50) circulant sur la ligne de transport (104b) supérieure, où chaque bande de transmission (110) est disposée à l'extérieur par rapport aux roues (50a), et
- des moyens d'entraînement (150) arrangés pour entraîner chaque bande de transmission (110),
où au niveau de l'ascenseur aval (106a), chaque rail supérieur (108b) présente un évidement (109) dans lequel est disposée une écluse (180) arrangée pour s'ouvrir lorsqu'un plateau (50) est transporté du rail inférieur (108a) au-dessus du rail supérieur (108b) et pour se refermer lorsque les roues (50a) dudit plateau (50) sont au-dessus du rail supérieur (108b) et où au niveau de l'ascenseur amont (106b), chaque rail inférieur (108a) présente un évidement (109) dans lequel est disposée une écluse (180) arrangée pour s'ouvrir lorsqu'un plateau (50) est transporté d'un rail supérieur (108b) de la paire sous-jacente, au-dessus du rail inférieur (108a) et pour se refermer lorsque les roues (50a) dudit plateau (50) sont au-dessus du rail inférieur (108a).

2. Installation de traitement thermique (100) selon la revendication 1, **caractérisée en ce qu'**au voisinage de chaque écluse (180), le rail (108a-b) concerné présente une fente (182) destinée à permettre le passage d'un taquet (50b) du plateau (50) lors de son transport d'un rail sous-jacent sur ledit rail (108a-b) concerné.

3. Installation de traitement thermique (100) selon l'une des revendications 1 ou 2, **caractérisée en ce que** chaque écluse (180) comporte au moins une porte (180a-b), ladite au moins une porte (180a-b) étant montée articulée sur le rail (108a-b) concerné entre une position ouverte dans laquelle ladite porte (180a-b) est basculée pour libérer l'évidement (109) et une position fermée dans laquelle ladite porte (180a-b) est basculée pour fermer l'évidement (109).

4. Installation de traitement thermique (100) selon la revendication 3, **caractérisée en ce que** chaque écluse (180) comporte une seule porte (180a) montée mobile en rotation sur le rail (108a-b) concerné autour d'un axe de rotation (X) horizontal et parallèle à la direction d'introduction (T).

5. Installation de traitement thermique (100) selon la revendication 3, **caractérisée en ce que** chaque écluse (180) comporte deux portes (180a-b), chacune montée mobile en rotation sur le rail (108a-b) concerné autour d'un axe de rotation horizontal et perpendiculaire à la direction d'introduction (T).

6. Installation de traitement thermique (100) selon l'une des revendications 3 à 5, **caractérisée en ce que** la ou chaque porte (180a-b) est contrainte vers sa position fermée par un ressort de traction (185) installé entre la ou chaque porte (180a-b) et le rail (108a-b).

7. Installation de traitement thermique (100) selon l'une des revendications 1 à 6, **caractérisée en ce que** chaque ascenseur (106a-b) comporte :
- un châssis (200) portant au moins un sous-plateau (202) destiné à recevoir un plateau (50),
- un système de guidage (204) assurant un guidage vertical du châssis (200),
- un moteur (206) présentant un arbre moteur (206a) mobile en rotation,
- une bielle principale (208) présentant une première extrémité montée articulée sur le châssis (200) et une deuxième extrémité,
- une première bielle secondaire (210a) présentant une première extrémité montée articulée avec la deuxième extrémité de la bielle principale (208) et une deuxième extrémité rigidement liée à l'arbre moteur (206a).

8. Installation de traitement thermique (100) selon la revendication 7, **caractérisée en ce que** chaque ascenseur (106a-b) comporte en outre une deuxième bielle secondaire (210b) symétrique de la première bielle secondaire (210a) par rapport à la bielle principale (208) et présentant une première extrémité montée articulée avec la deuxième extrémité de la bielle principale (208) et une deuxième extrémité montée mobile en rotation autour d'un axe de rotation coaxial avec l'arbre moteur (206a).
